# EUROPEAN PATENT APPLICATION

(11) **EP 1 204 031 A1**
(43) Date of publication of application: **08.05.2002**
(21) Application number: 00948268.8
(22) Date of filing: 28.07.2000
(51) Int. Cl.: G06F 17/30

(54) **READ SERVICE PROCESSING DEVICE, METHOD, AND SYSTEM, AND RECORDING MEDIUM**

(30) Priority: 25.02.2000 JP 2000050124
(71) Applicant: Beepam Co., Ltd., Shibuya-ku, Tokyo 150-0043 (JP)
(72) Inventor: YOSHIWARA, Kouichi Beepam Co., Ltd., Shibuya-ku, Tokyo 150-0043 (JP); MIYACHI, Makoto, Beepam Co., Ltd., Shibuya-ku, Tokyo 150-0043 (JP); NISHIMURA, Hideki, Beepam Co., Ltd., Shibuya-ku, Tokyo 150-0043 (JP)
(74) Representative: Midgley, Jonathan Lee
(86) International application number: JP0005046
(87) International publication number: WO0163473

(57) **Abstract**

To provide a browsing service processor, method and recording medium capable of viewing and selecting a plurality of programs simultaneously on a personal computer, etc. connected to a network and allowing users of mobile stations such as cellular phones to enter URLs of selected programs simply and easily. It is possible to display menus or contents of a plurality of programs in a display area (250) using a plurality of program display areas (211), etc. By checking check buttons (311), etc. of desired programs from among the plurality of programs displayed, it is possible to book-mark a plurality of programs and display these programs simultaneously in predetermined areas of a homepage. The URLs of one or more book-marked programs can be sent to a mobile station (10) side such as a cellular phone. As a result, the user of the mobile station (10) such as a cellular phone can obtain the URLs of desired programs and can thereby access the desired programs using these URLs.

## Description

### TECHNICAL FIELD

The present invention relates to a browsing service processor, method, system, and recording medium, and more particularly, to a browsing service processor, method, and recording medium for carrying out browsing services for information on a network.

### BACKGROUND ART

In recent years, there is a growing number of programs that include contents or menus on an IP (information provider) server, etc. which can be seen from cellular phones directly connected to an Internet. Such programs can also be accessed, viewed, created, or modified, etc. from a personal computer, etc. connected to the Internet.

In the above-described situation, when a user wants to view a plurality of programs on a personal computer, etc., by using the conventional browsing method, the user needs to display and view the desired plurality of programs one by one individually. Even in a case where the user wants to view those programs all together after carrying out book-marking for storing URL (Uniform Resource Locator) of each program, the problem is that book-marked programs are just displayed one after another and the user cannot view a plurality of programs simultaneously.

On the other hand, in recent years, services are also being provided that allow the users to acquire information on homepages or to send/receive e-mail using cellular phones directly connected to the Internet.

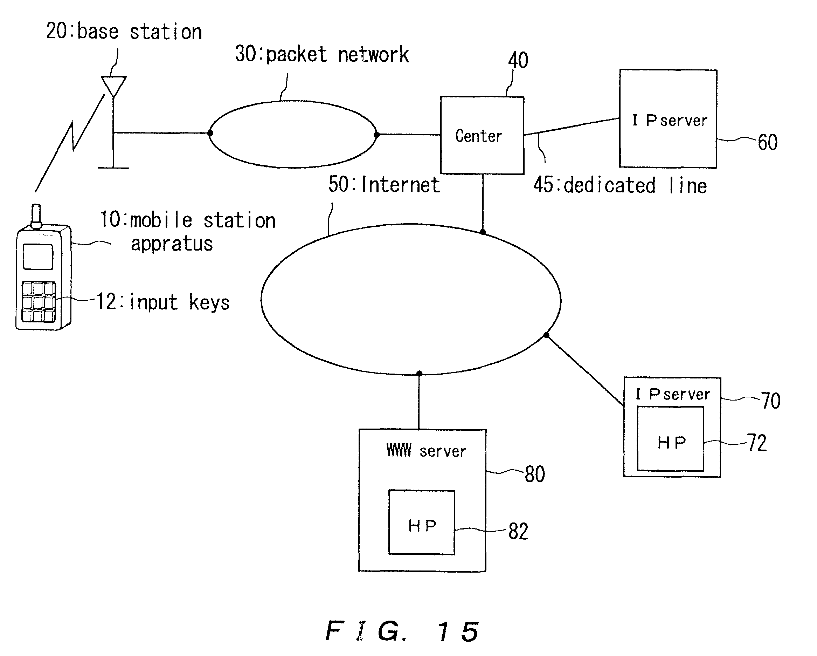

FIG. 15 shows a conventional network to which a cellular phone and an IP server, etc. are connected. In FIG. 15, reference numeral 10 denotes a mobile station such as a cellular phone; 12, input keys for carrying out input operations, etc. of the mobile station 10; 20, a base station connected by radio to the mobile station 10, etc.; 30, a packet network connected to the base station 20 to relay or switch, etc. data sent from the mobile station 10, etc. in packet units; 40, a center that connects data sent from the packet network 30 to an IP server 60, etc. which will be described later; 60, an IP server connected to the center 40 via a dedicated line 45; 80, a WWW (World-Wide Web) server which is a general homepage server; 82, a homepage provided on the WWW server 80; 70, an IP server which is another information-related server; 72, a homepage provided on the IP server 70; 50, the Internet to which the center 40, WWW server 80 and IP server 70, etc. are connected.

As shown in FIG. 15, when, for example, a request for acquiring information on the homepage 82 of the WWW server 80 is sent out by using the input keys 12 from the mobile station 10 such as a cellular phone, this request is sent to the center 40 via the base station 20 and packet network 30. The center 40 acquires the requested information from the homepage 82 on the WWW server 80 via the Internet 50 based on this transmitted request. The acquired information is delivered to the mobile station 10 such as a cellular phone from the center 40 via the packet network 30 and base station 20.

When the user wants to view the above-described program using the mobile station 10 such as a cellular phone directly connected to the Internet 50, it is often the case that the user cannot receive services such as browsing using an existing browser due to capacity limitations of information that the mobile station 10 such as a cellular phone can receive. Therefore, in order for the user of the mobile station 10 such as a cellular phone to search the above-described program, the user needs to enter the URL (Uniform Resource Locator) of the program directly. However, since the interface of the mobile station 10 such as a cellular phone does not use a user interface (Graphical User Interface: GUI) yet, the user must enter the URL of the program using the input keys 12. The problem is that the input keys 12 include only a limited number of keys and entering a URL, etc. of a program takes considerable time and trouble and also involves operational problems such as input errors.

As described above, when the user wants to view programs that can be viewed using a cellular phone directly connected to the Internet, from a personal computer, etc., directly connected to the Internet using the conventional browsing method, there is a problem that the user can view only one program at a time, and cannot view a plurality of programs simultaneously.

Furthermore, when the user attempts to view above-described program using the mobile station such as a cellular phone directly connected to the Internet, there is a problem that the GUI is not available to the mobile station and it takes considerable time and trouble to enter the URL, etc. of the program and input errors often occur.

### DISCLOSURE OF THE INVENTION

The present invention has been achieved to solve the problems described above and it is an object of the present invention to provide a browsing service processor, method and recording medium capable of simultaneously viewing a plurality of programs on a personal computer, etc. connected to a network.

It is another object of the present invention to provide a browsing service processor, method and recording medium capable of solving operational problems involved in entering URLs using input keys when the user of the mobile station such as a cellular phone searches for programs and allowing the user to simply and easily enter URLs.

The browsing service processor described in claim 1 is a browsing service processor for carrying out browsing services for information on a network, comprising: a plurality of programs displaying means for displaying a plurality of programs including contents and menus indicating the contents simultaneously in predetermined areas; program selecting means for selecting programs from among the plurality of programs simultaneously displayed by the plurality of programs displaying means; identifier recording means for recording identifiers for identifying resources on a network on which the programs selected by using the program selecting means are placed; and program displaying means for displaying the programs whose identifiers are recorded by the identifier recording means in the predetermined areas.

The browsing service processor described in claim 2, according to claim 1, when the program selecting means selects a single program, the program displaying means displays the contents and menus included in the single program in some of the predetermined areas according to a predetermined structure and displays profit-making information in other parts of the predetermined areas.

The browsing service processor described in claim 3, according to claim 1, further comprising display position changing means for changing the position in a predetermined area in which the program is displayed by the plurality of programs displaying means to a position where the program can be selected more frequently using the program selecting means.

The browsing service processor described in claim 4, according to any one of claims 1-3, wherein the predetermined areas which are displayed by the plurality of programs displaying means are areas provided on a homepage connected via a network.

The browsing service processor described in claim 5, according to any one of claims 1-3, further comprising transmitting means for transmitting information including the identifiers of the programs recorded by the identifier recording means to the outside via a network.

The browsing service processor described in claim 6, according to claim 4, further comprising transmitting means for transmitting information including the identifiers of the programs recorded by the identifier recording means to the outside via a network.

The browsing service processing method described in claim 7 is a browsing service processing method for carrying out browsing services for information on a network, comprising: a plurality of programs displaying step of displaying a plurality of programs including contents and menus indicating the contents simultaneously in predetermined areas; a program selecting step of selecting programs from among the plurality of programs simultaneously displayed by the plurality of programs displaying step; an identifier recording step of recording identifiers for identifying resources on a network on which the programs selected using the program selecting step are placed; and a program displaying step of displaying the programs whose identifiers are recorded by the identifier recording step in the predetermined areas.

The browsing service processing method described in claim 8, according to claim 7, wherein the predetermined areas displayed by the plurality of programs displaying step are provided on a homepage connected via a network.

The browsing service processing method according to an embodiment described in claim 9, according to claim 7 or 8, further comprising a transmitting step of transmitting information including the identifiers of the programs recorded by the identifier recording step to the outside via a network.

The recording medium according to an embodiment described in claim 10 is a recording medium that records a computer-readable program that carries out a browsing service processing method for information on a network, the browsing service processing method comprises: a plurality of programs displaying step of displaying a plurality of programs including contents and menus indicating the contents simultaneously in predetermined areas; a program selecting step of selecting programs from among the plurality of programs simultaneously displayed by the plurality of programs displaying step; an identifier recording step of recording identifiers for identifying resources on a network on which the programs selected using the program selecting step are placed; and a program displaying step of displaying the programs whose identifiers are recorded by the identifier recording step in the predetermined areas.

The recording medium according to an embodiment described in claim 11, according to claim 10, wherein the predetermined areas displayed by the plurality of programs displaying step are provided on a homepage connected via a network.

The recording medium according to an embodiment described in claim 12, according to claim 10 or 11, further comprising a transmitting step of transmitting information including the identifiers of the programs recorded by the identifier recording step to the outside via a network.

The browsing service processing system according to an embodiment described in claim 13 is a browsing service processing system having a browsing service processor for carrying out browsing services for information on a network and a mobile station connected to the network, the browsing service processor comprises: a plurality of programs displaying means for displaying a plurality of programs including contents and menus indicating the contents simultaneously in predetermined areas; program selecting means for selecting programs from among the plurality of programs simultaneously displayed by the plurality of programs displaying means; identifier recording means for recording identifiers for identifying resources on a network on which the programs selected using the program selecting means are placed; program displaying means for displaying the programs whose identifiers are recorded by the identifier recording means in the predetermined areas; and transmitting means for transmitting information including the identifiers of the programs recorded by the identifier recording means to the outside via a network, and the mobile station acquires information including the identifiers of the programs sent by the transmitting means.

Th browsing service processing system described in claim 14, according to claim 13, wherein the browsing service processor further comprises program acquiring means for acquiring programs via a network and the mobile station acquires information including identifiers of the programs from the terminal apparatus.

The browsing service processor described in claim 15 is a browsing service processor for carrying out browsing services for information on a network, comprising:
a program recording section that records programs including information input by the users of the browsing service and the contact addresses of the users; searching means for searching programs having predetermined identifiers from the programs recorded in the program recording section; and program displaying means for displaying the programs searched by the searching means in predetermined areas simultaneously according to the number of the programs.

The browsing service processor described in claim 16 is a browsing service processor for carrying out browsing services for information on a network, comprising:
a program recording section that records programs including card designs; a plurality of programs displaying means for displaying a plurality of programs recorded in the program recording section simultaneously in predetermined areas; program selecting means for selecting programs from among the plurality of programs simultaneously displayed by the plurality of programs displaying means; and transmitting means for transmitting information including the programs selected by the program selecting means or information including identifiers for identifying resources on a network on which the programs selected by the program selecting means are placed to the outside via a network.

The browsing service processor described in claim 17, according to claim 16, wherein the card recorded in the program recording section is a greeting card.

The browsing service processor described in claim 18, according to claims 15-17, wherein the program recorded in the program recording section displays price information regarding a predetermined product or service for which the users of the browsing service can receive a price service regarding the predetermined product or service at predetermined shops.

The browsing service processor described in claim 19, according to claim 18, wherein the price service is a discount service for discounting the purchasing price of a product or service providing price when the user purchases the product or receives the service.

The browsing service processor described in claim 20, according to claim 18, wherein the price service is predetermined points produced when the user purchases a product or receives a service and provides the user of the browsing service with points that allow a discount of the purchasing price or service providing price when the user purchases a product or receives a service later.

The browsing service processing method described in claim 21 is a browsing service processing method for carrying out browsing services for information on a network, comprising: a searching step of searching programs having predetermined identifiers from a program recording section that records programs including information input by the users of the browsing service and the contact addresses of the users; and a program displaying step of displaying the programs searched by the searching step simultaneously in predetermined areas according to the number of the programs.

The browsing service processing method described in claim 22 is a browsing service processing method for carrying out browsing services for information on a network, comprising: a plurality of programs displaying means for displaying a plurality of programs recorded in a program recording section that records programs including card designs simultaneously in predetermined areas; a program selecting step of selecting programs from among the plurality of programs simultaneously displayed by the plurality of programs displaying step; and a transmitting step of transmitting information including the programs selected by the program selecting step or information including identifiers for identifying resources on a network on which the programs selected in the program selecting step are placed to the outside via a network.

The browsing service processing method described in claim 23, according to claim 22, wherein the card recorded in the program recording section is a greeting card.

The browsing service processing method described in claim 24, according to claims 21-23, wherein the programs recorded in the program recording section display discount information regarding a predetermined product or a service for which the users of the browsing service can receive a discount service regarding the predetermined product or service at predetermined shops.

The recording medium described in claim 25 is a recording medium that records a computer-readable program that carries out a browsing service processing method for information on a network, the browsing service processing method comprises: a searching step of searching programs having predetermined identifiers from the program recording section that records programs including information input by the users of the browsing service and the contact addresses of the users; and a program displaying step of displaying the programs searched in the searching step simultaneously in predetermined areas according to the number of the programs.

The recording medium described in claim 26 is a recording medium that records a computer-readable program that carries out a browsing service processing method for information on a network, the browsing service processing method comprises: a plurality of programs displaying means for displaying a plurality of programs recorded in a program recording section that records programs including card designs simultaneously in predetermined areas; a program selecting step of selecting programs from among the plurality of programs simultaneously displayed in the plurality of programs displaying step; and a transmitting step of transmitting information including the programs selected in the program selecting step or information including identifiers for identifying resources on a network on which the programs selected in the program selecting step are placed to the outside via a network.

The recording medium described in claim 27, according to claim 25 or 26,
wherein the programs recorded in the program recording section display discount information regarding a predetermined product or service for which the users of the browsing service can receive a discount service regarding the predetermined product or service at predetermined shops.

### BRIEF DESCRIPTION OF THE DRAWINGS

FIG. 1 is a drawing illustrating a network to which a browsing service processor according to Embodiment 1 of the present invention is connected;
FIG. 2 is a block diagram showing an internal circuit block of a personal computer PC which is an embodiment of the browsing service processor of the present invention;
FIG. 3 illustrates an example of a multi-mode display that displays a plurality of programs simultaneously according to Embodiment 1 of the present invention;
FIG. 4 illustrates an example of a structure of programs used in Embodiment 1 of the present invention;
FIG. 5 illustrates an example where a plurality of contents or menus book-marked in FIG. 4 is displayed simultaneously;
FIG. 6 is a flow chart showing processing of a browsing service processing method according to Embodiment 1 of the present invention;
FIG. 7 illustrates an example of a multi-mode display that displays a plurality of programs simultaneously according to Embodiment 1 of the present invention;
FIG. 8 illustrates an example of a structure of a program used in Embodiment 2 of the present invention;
FIG. 9 is a drawing illustrating a single mode in which a single program A selected in FIG. 8 is displayed according to the structure thereof;
FIG. 10 is a drawing illustrating a network to which a browsing service processor according to Embodiment 3 of the present invention is connected;
FIG. 11 is a flow chart showing processing of a browsing service processing method according to Embodiment 3 of the present invention;
FIG. 12 is a flow chart showing processing of the browsing service processing method according to Embodiment 3 of the present invention;
FIG. 13 is a drawing showing an example of a bulletin board mode according to Embodiment 4 of the present invention;
FIG. 14 is a drawing showing an example of a post card mode according to Embodiment 5 of the present invention; and
FIG. 15 is a drawing showing a conventional network to which a cellular phone and IP server, etc. are connected.

### BEST MODE FOR CARRYING OUT THE INVENTION

With reference now to the attached drawings, embodiments of the present invention will be explained in detail below.

### Embodiment 1

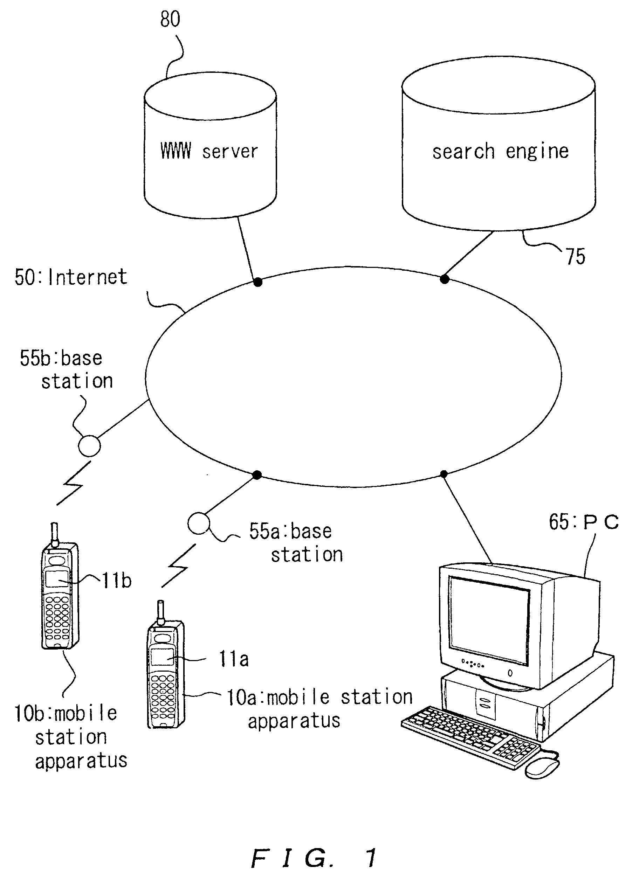

FIG. 1 is a drawing illustrating a network to which a browsing service processor according to Embodiment 1 of the present invention is connected. In FIG. 1, reference numeral 75 denotes a search engine for providing a search service provided on a world-wide web (WWW) server; 65, a personal computer (hereinafter referred to as "PC, etc.") that incorporates a browsing service processor according to an embodiment of the present invention; 10a and 10b, mobile station apparatuses such as cellular phones; 11a and 11b, image display sections that display images on the mobile station apparatuses 10a and 10b, etc.; 80, a WWW server which is a general homepage server; 55a and 55b, base stations connected by radio with the mobile station 10a, etc.; 50, a network such as the Internet to which the search engine 75, PC, etc. 65, WWW server 80 and the base station 55a, etc are connected.

An overview of the browsing service processor, etc. of the present invention will be given below. As shown in FIG. 1, the browsing service processor of the present invention mounted on a PC, etc. 65 accesses a homepage provided on the WWW server 80, etc., displays a plurality of programs including contents and menus indicating the contents displayed on the homepage simultaneously (plurality of programs displaying means), allows the user to select an arbitrary number of programs from among the plurality of programs displayed simultaneously (program selecting means) and carries out book-marking for recording the programs identifiers (Uniform Resource Locator: URL) to identify resources on the Internet 50 on which the programs arbitrarily selected by the user are placed (identifier recording means). Then, the browsing service processor of the present invention can display the plurality of programs whose URL is book-marked in a predetermined area of the homepage simultaneously (program displaying means). That is, the browsing service processor of the present invention can display a plurality of book-marked programs simultaneously instead of displaying those programs one after another. Furthermore, the browsing service processor of the present invention can send the URLs of the book-marked programs to a desired mobile station 10a, etc. over the Internet 50 (transmitting means) and display those programs on an image display section 11a, etc. of the mobile station 10a, etc. As a result, the user of the mobile station 10a, etc. can directly access a desired program by selecting a URL of the displayed program, and can thereby quite simply enter the URL of the program, which the user used to do using the input keys 12 one character after another. The mobile station 10a, etc. may be, for example, a mobile telephone such as a cellular phone and PHS (Personal Handyphone System) or an information terminal apparatus such as a mobile computer. If the mobile station 10a, etc. is a cellular phone owned by the user of the PC, etc. 65, the user can send arbitrary URLs selected on the PC, etc. 65 to the own mobile station 10a, etc. Furthermore, the PC, etc. 65 may also be a download sales terminal such as a digital kiosk connected to the Internet 50. In this case, the user searches URLs of arbitrary contents on the download sales terminal, sends the selected URLs to the mobile station 10a, etc. such as the own cellular phone and can thereby acquire the URLs of the arbitrary contents. Or instead of URLs, the user can also acquire a number indicating what number of access is made by the user to the contents and if this number corresponds to a predetermined value (lucky number), the user can collect a free gift at a shop, etc. where the download sales terminal is installed. First, the internal circuit block of the PC, etc. 65 will be explained below.

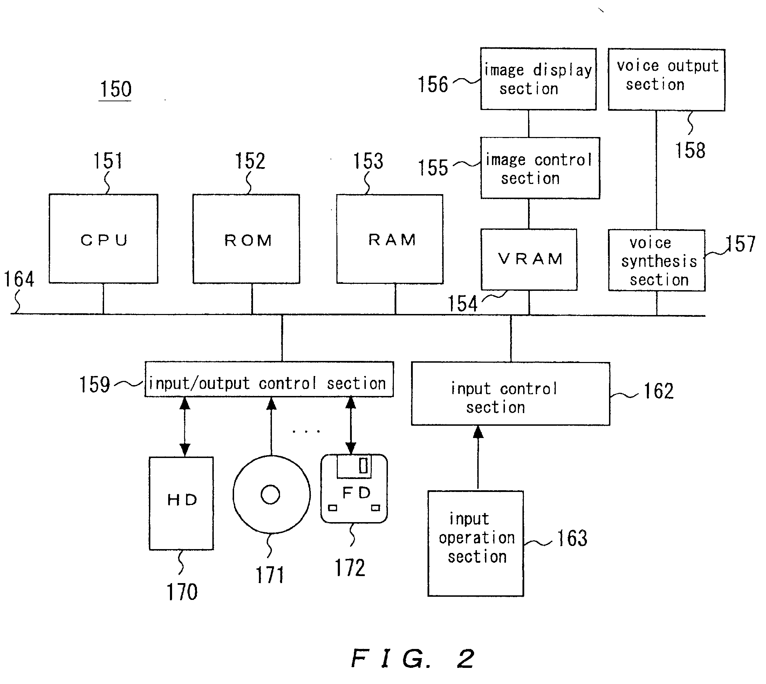

FIG. 2 shows an internal circuit block of the PC., etc. 65 which is an embodiment of the browsing service processor of the present invention. In FIG. 2, reference numeral 150 denotes an internal circuit block of the PC., etc. 65; 151, a processor CPU (Central Processing Unit) that executes the browsing service processing method of the present invention; 152, a read-only recording apparatus ROM (Read Only Memory) that stores data necessary for initialization and other processing of the internal circuit block 150 of the browsing service processor; 153, a readable/writable recording apparatus RAM (Random Access Memory) that stores a computer program or data to be executed by the CPU 151; 154, a storage apparatus VRAM (Video RAM) that is used as an image memory and has a capacity equivalent to a data capacity of one screen of an image display section 156 which will be described later; 155, an image control section that converts the data of the VRAM 154 to image data and sends to an image display section 156; 156, an image display section such as a display that displays an image based on the image data converted and sent from the VRAM 154; 157, a voice synthesis section that synthesizes voice generated through execution of the browsing service processing method of the present invention; 158, a voice output section that is connected to the voice synthesis section 157 and outputs voice; 171, a recording medium section that sets a recording medium such as a computer-readable and detachable CD-ROM (Compact Disc - Read Only memory), etc. that records a computer program or necessary data (hereinafter referred to as "browsing service processing program, etc.") to execute the browsing service processing method of the present invention; 172, a recording medium section that sets a recording medium that records the browsing service processing program, etc. such as a computer-readable and detachable floppy disk FD, magnet-optical disc MD, memory card; 170, a recording medium section that sets a recording medium such as a hard disk HD, etc. that records the browsing service processing program, etc.; 159, an input/output control section that is connected to the recording medium sections 170, 171 or 172, etc. and controls input/output; 163, an input operation section such as a mouse and keyboard operated by the user of the browsing service processor of the present invention; 162, an input control section that is connected to the input operation section 163 and performs input control, etc.; 164, a bus that connects the above-described CPU 151, ROM 152, RAM 153, VRAM 154, voice synthesis section 157 and input/output control sections 159 and 162, etc.

The browsing service processing program, etc. of the present invention can be recorded in a recording medium such as the CD-ROM, FD, MD, memory card or hard disk, which are set in the recording medium sections 170, 171 or 172. The browsing service processing program, etc. recorded in the recording medium such as the CD-ROM, FD, MD, memory card or hard disk is loaded to the RAM 153 via the input/output control section 159 and bus 164. The CPU 151 executes the browsing service processing program loaded to the RAM 153 and thereby allows the user to select a URL, etc. of a program from the input operation section 163 via the input control section 162, causes the image display section 156 to display an image being executed and causes voice output section 158 to output voice being executed.

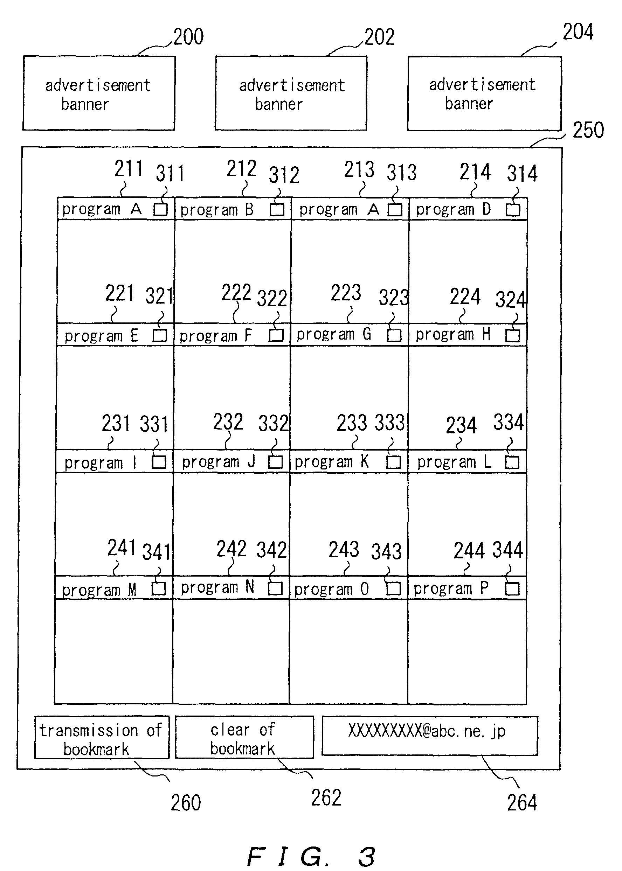

FIG. 3 illustrates an example of a multi-mode display that displays a plurality of programs simultaneously according to Embodiment 1 of the present invention. In FIG. 3, reference numerals 211 to 214 denote display areas (parts of a predetermined area) of program A to program D; 311 to 314, check buttons used to book-mark contents displayed in the display areas 211 to 214 of the program A to program D, respectively; 221 to 224, display areas (parts of a predetermined area) of program E to program H; 321 to 324, check buttons used to book-mark contents displayed in the display areas 221 to 224 of the program E to program H, respectively; 231 to 234, display areas (parts of a predetermined area) of program I to program L; 331 to 334, check buttons used to book-mark contents displayed in the display areas 231 to 234 of the program I to program L, respectively; 241 to 244, display areas (parts of a predetermined area) of program M to program P; 341 to 344, check buttons used to book-mark contents displayed in the display areas 241 to 244 of the program M to program P, respectively; 260, a send button to be clicked by the input operation section 163 such as a mouse when URLs of one or more book-marked programs are sent to the mobile station 10a, etc.; 262, a clear button to be clicked by the input operation section 163 such as a mouse when URLs of one or more book-marked programs are cleared simultaneously; 264, an e-mail address display section for the receiver to which URLs of one or more book-marked programs are sent; 250, a display section (predetermined area) of a plurality of programs, etc.; 200, 202 and 204, advertising banners which are advertising images displayed on a homepage. FIG. 3 only shows 4 × 4 = 16 display areas 211, etc. but this number is used for convenience of explanations and the number of display areas is not limited to 4 × 4 = 16.

The conventional browsing method only displays a single book-marked program, but Embodiment 1 of the present invention uses a plurality of program display areas 211, etc. as shown on the display section 250 in FIG. 3, and can thereby display menus or contents of a plurality of programs (plurality of programs displaying means). By checking the check buttons 311, etc. of desired programs from among a plurality of programs displayed, the user is allowed to select arbitrary programs (program selecting means) and it is possible to book-mark an arbitrary number of programs selected by this user (identifier recording means). An example where a plurality of book-marked programs are displayed in a predetermined area of a homepage simultaneously will be explained below.

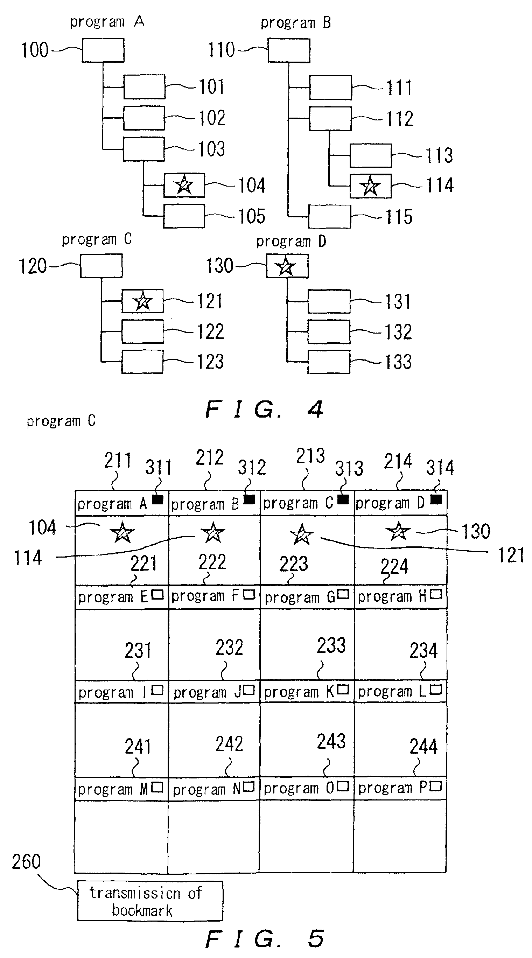

FIG. 4 illustrates an example of a structure (predetermined structure) of programs used in Embodiment 1 of the present invention. As described above, a program is constructed of contents and a menu that indicates the contents using a link. In FIG. 4, reference numeral 100 denotes a top menu of a program A; 101 and 102, contents under the menu 100; 103, a menu under the menu 100; 104 and 105, contents under the menu 103. Likewise, reference numeral 110 denotes a top menu of a program B; 111 and 115, contents under the menu 110; 112, a menu under the menu 110; 113 and 114, contents under the menu 112. Likewise, reference numeral 120 denotes a top menu of a program C; 121, 122 and 123, contents under the menu 120; 130, a top menu of a program D; 131, 132 and 133, contents under the menu 130. As described above, it is desirable that programs are organized in a directory structure. However, programs may also have other structures, for example, a network structure.

For convenience of explanations, suppose the following situation. That is, while the program A 100 is displayed in the display area 211, etc., the user, etc. who views this program selects the contents 104 via the menu 103 linked from the program A 100 and displays and book-marks the contents 104 in the display area 211, etc. (indicated by a star in FIG. 4). Likewise, while the program B 110 is displayed in the display area 212, etc., the user, etc. who views this program selects the contents 114 via the menu 112 linked from the program B 110 and displays and book-marks the contents 114 in the display area 212, etc. (indicated by a star in FIG. 4). Likewise, while the program C 120 is displayed in the display area 213, etc., the user, etc. who views this program selects the contents 121 linked from the program C 120 and displays and book-marks the contents 121 in the display area 213, etc. (indicated by a star in FIG. 4). Likewise, while the program D 130 is displayed in the display area 214, etc., the user, etc. who views this program selects and book-marks (menu 130 of) the program D 130 (indicated by a star in FIG. 4).

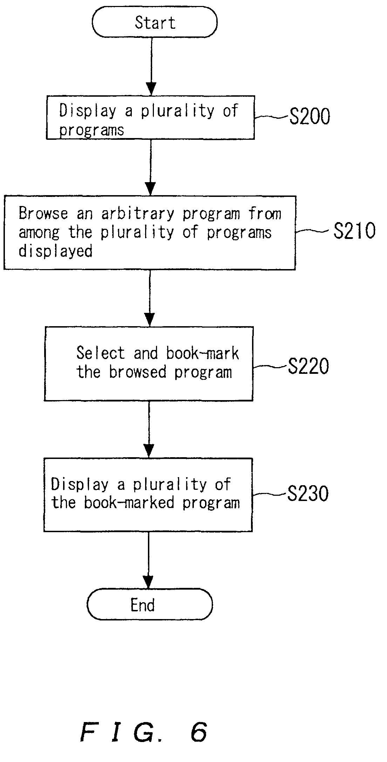

FIG. 5 illustrates an example where a plurality of contents or menus book-marked in FIG. 4 are displayed simultaneously. In FIG. 5, the parts assigned the same reference numerals as those in FIG. 3 or FIG. 4 indicate the same parts, and therefore explanations thereof will be omitted. As shown in FIG. 5, the display area 211 displays the contents 104 which is selected and book-marked when the program A 100 is browsed and the check button 311 is checked and shown in black in reverse video. The display area 212 displays the contents 114 which is selected and book-marked when the program B 110 is browsed and the check button 312 is checked and shown in black in reverse video. The display area 213 displays the contents 121 which is selected and book-marked when the program C 120 is browsed and the check button 313 is checked and shown in black in reverse video. The display area 214 displays the menu 130 which is selected and book-marked when the program D 130 is browsed and the check button 314 is checked and shown in black in reverse video. As described above, a plurality of the contents 104 to menu 130 of the selected and book-marked programs A100 to D130 can be displayed simultaneously in a predetermined display area of the homepage, for example, the display areas 211 to 214 (program displaying means).

FIG. 6 is a flow chart showing processing of a browsing service processing method according to Embodiment 1 of the present invention. As shown in FIG. 6, a plurality of programs are displayed in the display section 250 first (step S200, plurality of programs displaying means). An arbitrary program is browsed from among the plurality of programs displayed (step S210). Of the browsed programs, the user is instructed to select and book-mark a desired program (step S220, program selecting means, identifier recording means). The program book-marked by the user is displayed in the display section 250 (step S230, program displaying means). In the above-described explanation, a browsed program is selected and book-marked, but it is also possible to select and book-mark not only programs browsed but also programs created or modified, etc.

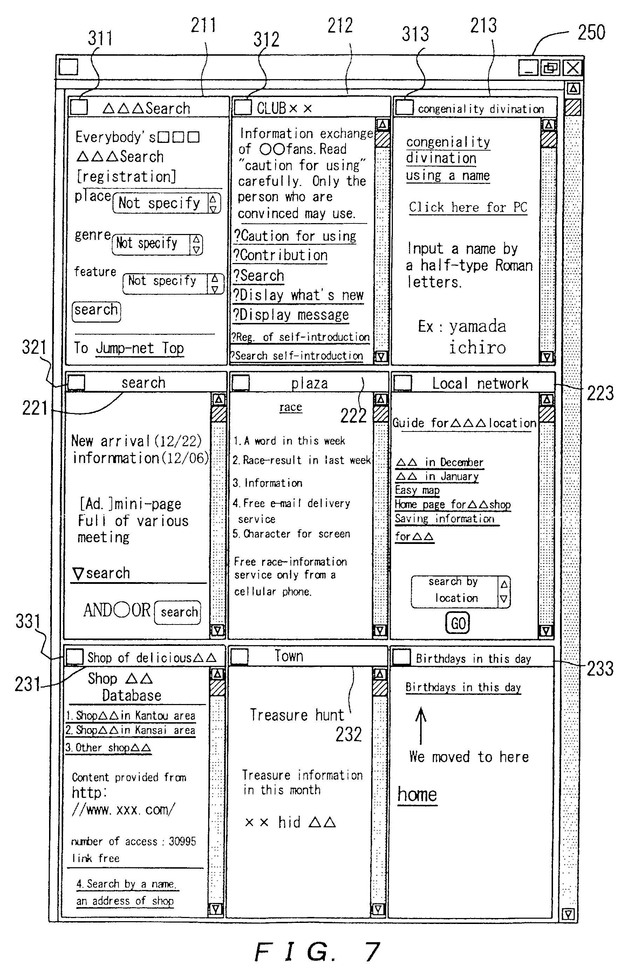

FIG. 7 illustrates an example of a multi-mode display according to Embodiment 1 of the present invention that displays a plurality of programs simultaneously. In FIG. 7, the parts assigned the same reference numerals as those in FIG. 3 to FIG. 5 indicate the same parts, and therefore explanations thereof will be omitted. As shown in FIG. 7, the display area 211 shows contents "<<< Search". The display area 212 shows a menu "club XXX" and this menu also includes a title "information exchange for fans...". Similarly, the display area 213 shows a menu "congeniality divination", the display area 221 shows a menu "search", the display area 222 shows a menu "plaza", the display area 223 shows a menu "local network", the display area 231 shows a menu "shop of delicious <<", the display area 232 shows a contents "town", and the display area 233 shows a menu "birthdays in this month". While the check buttons 311, etc. are shown at the top right of the display areas 211, etc. in FIG. 3, the check buttons 311, etc. can also be displayed at the top left of the display areas 211, etc. as shown in FIG. 7.

In the above explanation, the display areas 211, etc. of a plurality of programs show fixed programs respectively, but the display areas to show specific programs may be changed arbitrarily. The display areas most frequently selected by the user by clicking, etc. are often programs that are positioned at the top left in the display section 250 as in the case of the display area 211. Especially when the display areas extend over a plurality of pages, the display area 211 positioned at the top left on the first page is far more frequently selected by the user than the display area 233, etc. at the bottom right. Therefore, programs displayed in the display area 211 is believed to have much higher advertising effects than programs displayed at other positions. Embodiment 1 of the present invention can arbitrarily move programs to the above-described display areas where the programs are selected with high frequency (display position changing means). As a result, this can also increase the advertising effects of the program moved to the display area where the program may be selected with high frequency and can thereby increase profits of the advertisement.

A plurality of display areas 211, etc. can also display a plurality of programs collectively by group of various fields of browsing services provided by communication service providers of the mobile station 10a, etc., for example, a beautification-related field. As a result, the user of the PC, etc. 65 can search for programs in groups of respective fields collectively. When the user of the PC, etc. 65 searches for programs of a specific field, for example, a beautification-related field, it is also possible to move the display area showing programs that perform advertising of cosmetics to the above-described position where the program may be selected with high frequency (display area 211).

As shown above, according to Embodiment 1, it is possible to display a plurality of program menus or contents in the display area 250 using a plurality of program display areas 211, etc. By checking the check buttons 311, etc. of desired programs from among a plurality of displayed programs, it is possible to select and book-mark an arbitrary number of programs. The book-marked programs can be displayed in a predetermined area of the homepage simultaneously.

### Embodiment 2

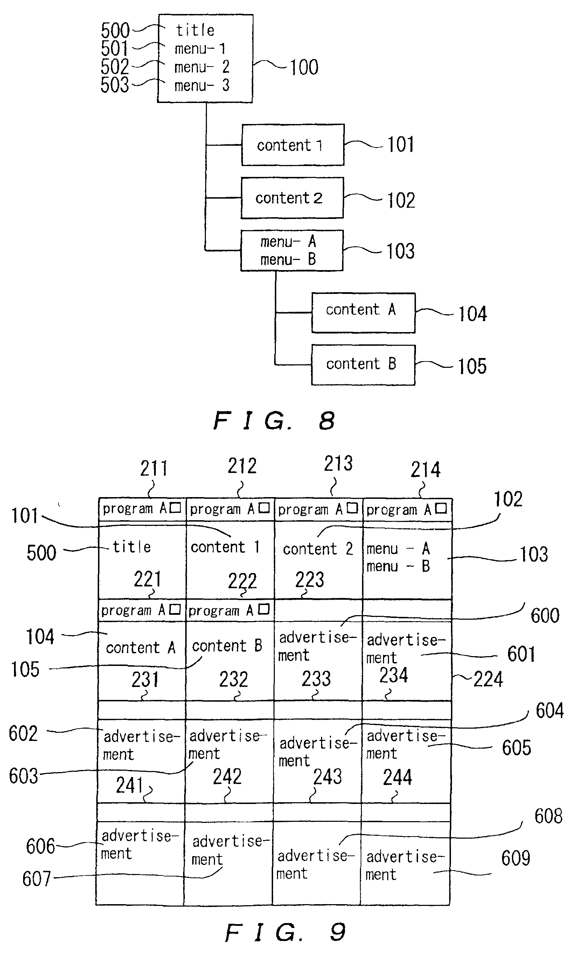

FIG. 8 illustrates an example of a structure of a program used in Embodiment 2 of the present invention. In FIG. 8, reference numeral 100 is a top menu of a program A and includes a title display 500, a menu 1 display 501 indicating contents 1 (101), a menu 2 display 502 indicating contents 2 (102) and a menu 3 display 503 indicating a menu A and menu B (103). Reference numerals 101 and 102 denote contents 1 and contents 2 under the menu 100, and 103 denotes a menu under the menu 100 and includes a menu A display indicating contents A (104) and menu B display indicating content B (105). Reference numerals 104 and 105 denote contents A and contents B under the menu 103.

Embodiment 1 above describes an example of the multi-mode display, when a single program is selected (program selecting means) from among a plurality of programs displayed in FIG. 3, etc. above, Embodiment 2 of the present invention can display (program displaying means) the selected single program according to the structure thereof (predetermined structure). FIG. 9 describes a single mode in which a selected single program A shown in FIG. 8 is displayed according to the structure thereof. In FIG. 9, the parts assigned the same reference numerals as those in FIG. 3 or FIG. 8 indicate the same parts, and therefore explanations thereof will be omitted. As shown in FIG. 9, the display area 211 displays the title display 500 of the selected program A. Though not shown in the figure, the display 211 also shows the menu 1 display 501, menu 2 display 502 and menu 3 display 503. The display area 212 shows contents 1 (101) indicated by the menu 1 display 501 and the display area 213 shows contents 2 (102) indicated by the menu 2 display 502. The display area 214 shows menu A display and menu B display 103 indicated by the menu 3 display 503 and the display area 221 shows contents A (104) indicted by the menu A display and menu B display 103 and the display area 222 shows content B (105).

As described above, the selected program A can be displayed according to the structure thereof, for example, the directory structure. In this case, the display areas 211 to 244 (other parts of the predetermined area) can show advertising images (profit-making information) first. This advertising images 600, etc. may be images including image or characters, etc. such as the advertising banners 200, etc. shown in FIG. 3. If the menu 100 is selected first, the display area 211 (part of a predetermined area) shows the title display 500, menu 1 display (501), menu 2 display (502) and menu 3 (503). Here, if the menu 1 display (501) is selected, the display area 212 shows the image of contents 1 (101) instead of an advertising image. If the menu 2 display (502) is selected, the display area 213 shows the image of contents 2 (102) instead of an advertising image. If the menu 3 display (503) is selected, the display area 214 shows the images of the menu A and menu B 103 instead of an advertising image. Likewise, if the menu A display is selected, the display area 221 shows the image of the contents A (104) instead of an advertising image. If the menu B display is selected, the display area 222 shows the image of the contents B (105) instead of an advertising image. As described above, as contents or menu of the program A is selected, the contents or menu can be displayed instead of advertising images. The advertising images 600 to 609 remain as they are, displaying advertisements.

As described above, according to Embodiment 2, the display areas show advertising images first and then advertising images can be replaced by contents or menus of the program one by one according to the structure of the selected single program.

### Embodiment 3

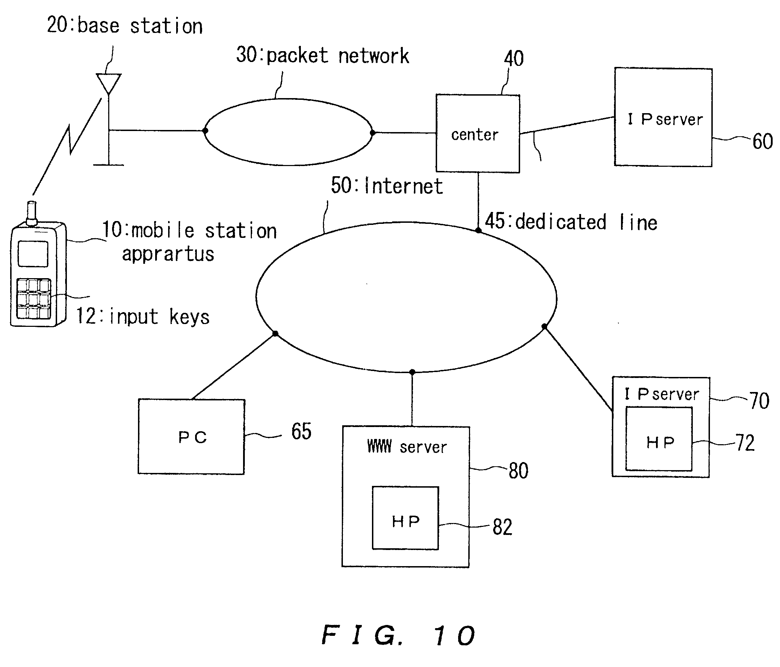

FIG. 10 illustrates a network to which a browsing service processor according to Embodiment 3 of the present invention is connected. In FIG. 10, the parts assigned the same reference numerals as those in FIG. 1 have the same functions and therefore explanations thereof will be omitted. In FIG. 10, reference numeral 12 denotes input keys to carry out input operations, etc. for a mobile station 10a, etc. such as a cellular phone; 20, a base station connected by radio to the mobile station 10a, etc.; 30, a packet network that is connected to the base station 20 and relays or switches data sent from the mobile station 10a, etc. in packet units; 40, a center that connects the data sent from the packet network 30 to an IP server 60, etc. which will be described later; 60, an IP server connected to the center 40 via a dedicated line 45; 82, a homepage provided on a WWW server 80; 70, an IP server which is a server of another information system; 72, a homepage provided on the IP sever 70; 50, a network such as the Internet to which the center 40, WWW server 80, IP server 70 and PC 100, etc. are connected.

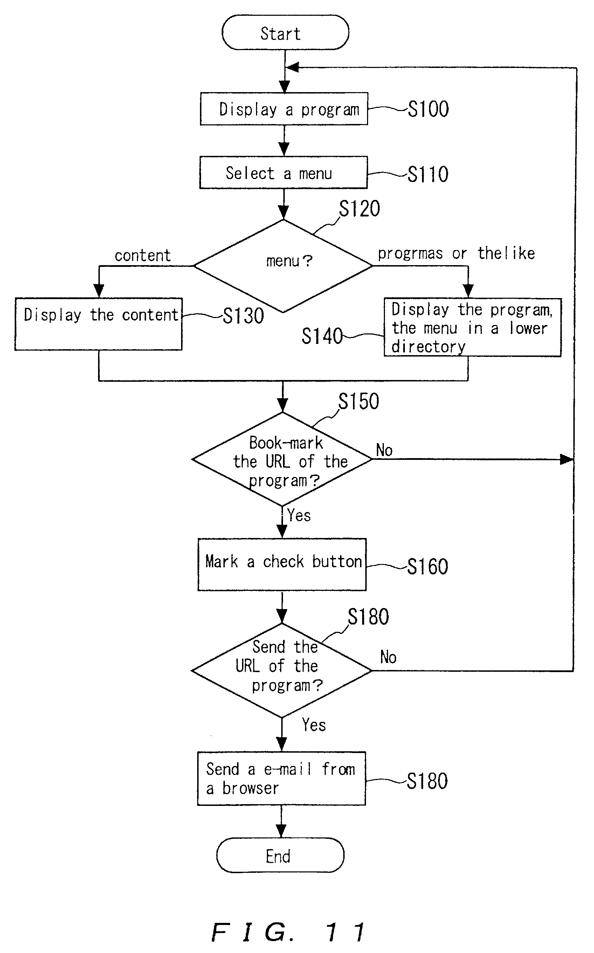

An overview of the browsing service processor of the present invention will be shown below. As shown in FIG. 10, for example, a request for searching for a desired program on the WWW server 80 is sent from the mobile station 10a, etc. such as a cellular phone to the PC, etc. 65 by e-mail, etc. via the base station 20, the packet network 30, the center 40 and the Internet 50. The PC, etc. 65 sends the URL of the program as the search result to the mobile station 10a, etc. via the Internet 50, the center 40, the packet network 30 and the base station 20 based on the processing shown in the flow chart in FIG. 11 (will be described later). As a result, the user of the mobile station 10a, etc. obtains the URL of the desired program and can thereby directly access the desired program simply by selecting this URL. Therefore, the user can simply and easily view the desired program with the mobile station 10a, etc. such as a cellular phone without any problem involving input operations.

FIG. 11 is a flow chart showing processing of a browsing service processing method according to Embodiment 3 of the present invention. When the user of the mobile station 10a, etc. such as a cellular phone sends a request for searching for a program to the PC, etc. 65 (browsing service processor) by e-mail, etc., the PC, etc. 65 displays, for example, the title of the program or menu, etc. first as shown in FIG. 11 (step S100). Here, the program includes a title, menu and contents and the menu may indicate not only the contents but also a menu in a lower directory or another program recursively. When a displayed menu is selected (step S110, program selecting means), it is determined whether the selected menu indicates contents or a menu in a lower directory or indicates another program recursively (step S120). If the selected menu is a menu indicating contents, the contents is displayed (step S130). If the selected menu is a menu indicating a menu in a lower directory or indicating another program recursively, the menu in a lower directory or another recursively indicated program is displayed (step S140). From the displayed contents or a menu in a lower directory or another recursively indicated program, the user determines whether or not to store (book-mark) the URL of the program, etc. (step S150) and if the user book-marks the URL, the user is instructed to mark a predetermined check button (step S160, identifier recording means). If the URL of the program, etc. is not book-marked, the process returns to step S100 and repeat the processing for another program. Examples of not book-marking the URL of the program, etc., include cases where the user thinks that there is no need to book-mark the contents displayed in step 130, a menu in a lower directory is shown in step 140 and the user views the content indicated by the menu, or the program displayed in step 140 includes a menu in a lower directory, and the user further continues to view the content indicated by the menu and since the program indicated in step 140 includes a menu, the user further continues to view the content indicated by the menu. After marking the check button in step S160, the user determines whether or not to send the URL of the program (step S180). If the URL is to be sent, the user sends the URL of the program from the PC, etc. 65 to the mobile station 10a, etc. by e-mail, etc. (step S180, transmitting means) and finishes the processing. If URL is not to be sent, the process returns to step S100 and the above-described processing is repeated for another program. Thus, the user can send one URL at a time or by repeating the above-described processing, the user can book-mark URLs of a plurality of programs and send the book-marked URLs of the plurality of programs all together.

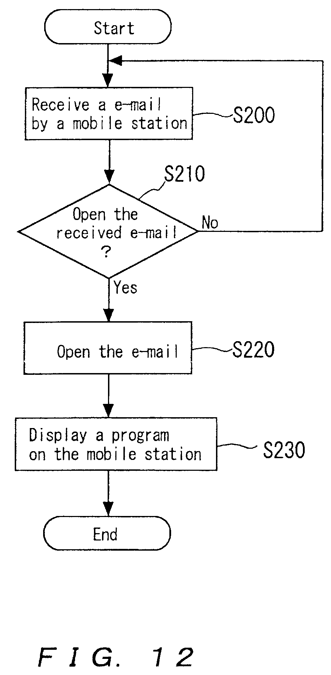

FIG. 12 is a flow chart showing processing of a browsing service processing method according to Embodiment 3 of the present invention. When an URL of a program is sent from the PC, etc. 65 (browsing service processor) to the mobile station 10a, etc. by e-mail, etc., the mobile station 10a, etc. receives (step S200) the e-mail first as shown in FIG. 12. If the user sees the program with the URL, the user opens the received e-mail (step S210, step S220) and displays the program on the mobile station 10a, etc. (step S230). If the user does not see the program with the URL in step S210, the user can go back to step S200 and receive a URL of another program. Though not shown in the flow chart in FIG. 12, it is also possible to receive URLs of a plurality of programs collectively and record those URLs in a memory (not shown) and determine whether or not to see the programs corresponding to this plurality of URLs.

In the above-described explanation, data sent to the mobile station 10a, etc. is a URL of a program, but it is also possible to send a copy of an advertisement, e-mail address or telephone number, etc. in addition to this URL.

As shown above, according to Embodiment 3, it is possible to search for programs using the PC etc., 65, select desired programs, book-mark the URLs and send the URLs of one or more programs to the mobile station 10a, etc. such as a cellular phone. As a result, the user of the mobile station 10a, etc. obtains the URL of a desired program and can thereby access the desired program using this URL. Thus, the user of the mobile station 10a, etc. can simply and easily see desired programs on the mobile station 10a, etc. without any problems involving input operations.

### Embodiment 4

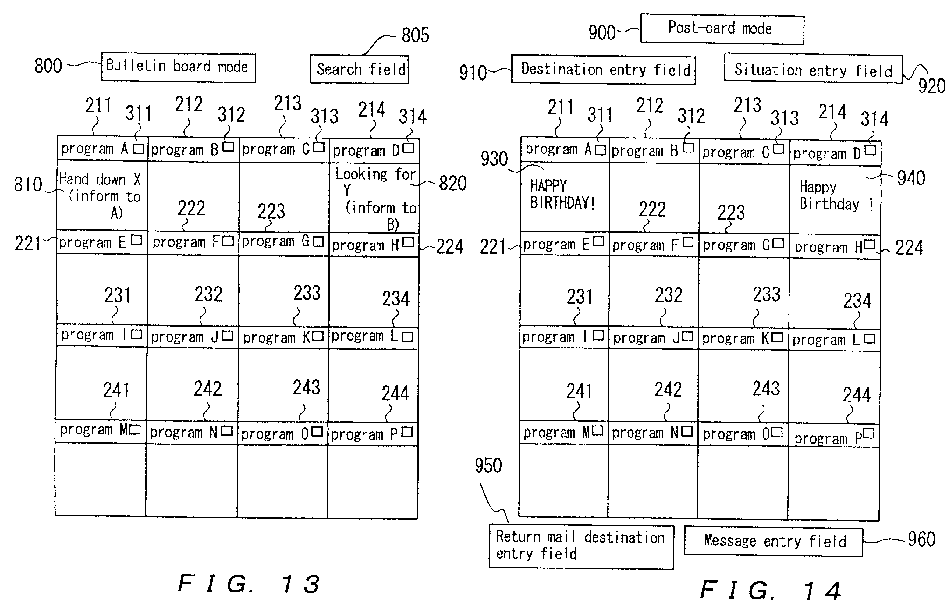

Embodiment 1 above describes an example of a multi-mode in which a plurality of programs are displayed simultaneously on a plurality of display areas 211, etc. This Embodiment 4 shows an example of a bulletin board mode in which users of a plurality of mobile stations 10a, etc. can freely write information in a plurality of display areas 211, etc. That is, this Embodiment 4 shows an embodiment of using a program as a bulletin board. FIG. 13 is a drawing showing an example of a bulletin board mode according to Embodiment 4 of the present invention.

In FIG. 13, the parts assigned the same reference numerals as those in FIG. 3 indicate the same pans, and therefore explanations thereof will be omitted. In FIG. 13, reference numeral 800 denotes a title display section that indicates a bulletin board mode; 810, information, for example, written by user A of the mobile station 10a; 820, information, for example, written by user B of the mobile station 10b; 805, a search field in which the user enters a search keyword to search for desired information.

As shown in FIG. 13, the user A, etc. can freely write information in a predetermined form (not shown) prepared on a server such as the PC, etc. 65 via a network such as the Internet 50 from a portable terminal or information terminal, etc. For example, the user A can write information like "Hand down X", while the user B can write information like "Looking for Y". As shown in FIG. 13, the written information is displayed in the display area 211 as information 810 of the user A so that the information can be notified to the user A or displayed in the display area 214 as information of the user B so that the information can be notified to the user B. Further, this information 810, etc. is classified as appropriate and stored in the hard disk 170, etc. connected to the server such as PC, etc. 65 (program recording section). For example, the information of the user A is classified so that it can be searched for with keywords "Y" and "Need". The information of the user B is classified so that it can be searched for with keywords "Y" and "Search". When the user C of the bulletin board mode sees the information 810 of the user A shown in the display area 211 and thinks that it is possible to hand down X in his/her possession, it is possible to have contact with the user A based on the contact address of the user A included in the information 810 of the user A. As the contact address, the mail address of the cellular phone, telephone number or e-mail address, etc. of the user A, etc. can be included. If the user C of the bulletin board mode wants to acquire desired information, for example, when the user C wants to look for a person who can hand down X, the user C enters "X", etc. as the keyword in the search field 805 and thereby searches (searching means) information including the keyword "X" from the hard disk 170, etc. and displays in the display area 211, etc. (program displaying means). Hereafter, the user C, etc. can have contact with the user A, etc. in the same way as for the above-described method.

When a mail address of a cellular phone, etc. is used as the above-described contact address, the user can freely set this mail address and effectively protect his/her privacy. This eliminates the need for mediation by mail or advance membership registration by the user.

The above-described bulletin board mode has been explained using information such as "Hand down" or "Looking for", but, of course, other information can also be used. Examples of other information includes auction information represented by "Sell/buy", etc., meeting information for users seeking to see each other, correspondent information for users who view certain sports to write information like a correspondent.

Thus, Embodiment 4 makes it possible to use a bulletin board mode in which the users of a plurality of mobile stations 10a, etc. can freely write in a plurality of display areas 211, etc., allowing the users in the bulletin board mode to have contact with other users appropriately regarding desired information.

### Embodiment 5

Embodiment 4 above has described an example of the bulletin board mode using a program as a bulletin board. This Embodiment 5 shows an example of a post card mode using a program as a post card. FIG. 14 illustrates an example of a post card mode according to Embodiment 5 of the present invention. In FIG. 14, the parts assigned the same reference numerals as those in FIG. 3 indicate the same parts, and therefore explanations thereof will be omitted. In FIG. 14, reference numeral 900 denotes a title display section indicating a post card mode; 930 and 940, displays of designs of greeting cards such as a birthday card, wedding celebration card, New Year's card, card offering best wishes for the hot season and Christmas card; 920, a situation entry field to enter the situation in which the above-described greeting card is sent (birthday, wedding ceremony, etc.); 910, a destination entry field to enter the destination of the greeting card with the selected design; 950, a return mail destination entry field to enter the return address when the user wants return mail for the greeting card sent; 960, a message entry field to enter a message to be included in the greeting card with the selected design.

As shown in FIG. 14, the user A, etc. can freely select the display 930, etc. of greeting card design recorded on the server such as the PC 65, etc. from a portable terminal or information terminal, etc. via a network such as the Internet 50. For example, when the user A is sending a greeting card for birthday celebration to the user B, the user A enters a keyword such as "Birthday" in the situation entry field 920 first. As a result, the display area 211 shows the display 930 with greeting card design "HAPPY BIRTHDAY!" for birthday celebration and the display area 214 shows the display 940 with another greeting card design "Congratulations on your birthday!". Then, the user A selects the display 930, etc. with desired greeting card design and enters the contact address of the user B, the destination. As the contact address, the mail address of the cellular phone, telephone number or e-mail address, etc. of the user B can be entered. When the user wants return mail, the user enters the contact address of the user A in the return mail destination entry field 950. As the contact address, the mail address of the cellular phone, telephone number or e-mail address, etc. of the user B can be entered in the same way as for the destination entry filed 910. The contact address of the return mail destination entry field 950 entered can also be included in the display 930, etc. of the selected greeting card design. Furthermore, the user A can also enter a desired message in the message entry field 960. The message entered in the message entry field 960 can also be included in the display 930, etc. of the selected greeting card design. After this, by clicking on a send button (not shown), the user A can send the display 930, etc. of the greeting card design with the return mail destination or a message added if necessary from the PC 65 to the cellular phone or portable terminal, etc. of the user B, the destination via a network such as the Internet 50. The user B can see the display 930, etc. of the greeting card design sent and have contact such as sending a reply to the user A, the sender, in real time.

In the above-described post card mode, the display 930, etc. of the greeting card design is sent from the PC 65 to the cellular phone or portable terminal, etc. of the user B, the destination via a network such as the Internet 50. However, the 930, etc. of the greeting card design can also be uploaded from the PC 65 to the desired server 80, etc. via a network such as the Internet 50. In this case, the URL of the server to which the greeting card design was uploaded and a desired comment, etc. are sent to the cellular phone or portable terminal, etc. of the user B. The user B sees the URL and comment sent, then accesses this URL and can thereby see the 930, etc. of the greeting card design sent to the user B and have contact with the user A, the sender, such as sending a reply, etc. in real time.

As shown above, Embodiment 5 makes it possible to use a post card mode using a program as a post card, allowing the user A, etc. to freely select the display 930, etc. of a greeting card design recorded on a server such as the PC 65 from the cellular phone or portable terminal via a network such as the Internet 50. The display 930, etc. of the selected greeting card design can be sent to the cellular phone or portable terminal of the user B. The user B can see the display 930, etc. of the greeting card design sent to the user B and have contact with the user A, the sender, such as sending a reply, etc. in real time.

### Embodiment 6

Embodiment 6 shows a case where a discount such as a coupon is attached to a program itself. For example, suppose the display area 231, etc. shown in FIG. 7 is a program linked with a predetermined magazine and a coupon (price information) linked with the above-described magazine is attached to "Shop of delicious <<" in the display area 231, etc. When the user A, etc. who sees the program linked with the magazine in the display area 231, etc. visits the shop, etc. displayed, the user can receive a price service, for example, a discount service that allows the user to acquire a product at a predetermined discount price or a member price. It is also possible to register the number of the cellular phone of the user A, etc. as member information beforehand and perform a setting using a counter, etc. so that the user A, etc. can use the coupon only a predetermined number of times. It is also possible to limit the period or time during which the coupon is available.

The above-described price service may also be a point service which provides the user A, etc. with points produced when the user purchases a product or receives a service. These points are produced when the user purchases a product or receives a service and can be saved. When the user A, etc. purchases a product or receives a service later, the user can receive a discount service for the purchasing price or supply price using those saved points.

The explanation above describes a magazine-linked coupon linked with a predetermined magazine, but it is also possible to set a program with a predetermined product, for example, a product linked with cellular phones, etc. and allow the user A, etc. who sees the program of this product and visits the shop of the predetermined cellular phone to purchase a cellular phone, etc. at a predetermined discount price or member price.

### Embodiment 7

It goes without saying that the object of the present invention can also be attained by supplying the browsing service processor of the present invention with a recording medium that records a computer program that implements the functions of the above-described embodiments and causing the CPU 151 of the browsing service processor to read and execute the computer program stored in the recording medium. In this case, the computer program itself read from the recording medium implements new functions of the browsing service processor of the present invention and the recording medium that records the computer program constitutes the present invention. As the recording medium that records the computer program set in the recording medium sections 171 and 172, etc., it is possible to use, for example, a CD-ROM, floppy disk, hard disk, ROM, memory card or optical disk.

As shown above, according to Embodiment 7, the object of the present invention can also be attained by supplying the browsing service processor of the present invention with a recording medium that records a computer program that implements the functions of the above-described embodiments and causing the CPU 151 of the browsing service processor to read and execute the computer program stored in the recording medium.

The above-described embodiments assume that the PC, etc. 65 is connected to the Internet 50 (on-line state), but the PC, etc. 65 may also be left unconnected to the Internet 50 (off-line state). In this case, a plurality of URLs is supplied, recorded in a recording medium such as a CD-ROM and the PC, etc. 65 reads a desired URL from the CD-ROM above, etc. set in the recording medium section 171 and can thereby execute the browsing service processing method of the present invention in an off-line state. The user of the PC, etc. 65 selects a desired program from among a plurality of programs displayed and book-marks URL thereof and can record the URL of the desired book-marked program in a hard disk HD set in the recording medium section 170. After this, it is also possible to set the machine in an on-line state and send the URL of the desired program recorded in the hard disk HD to the mobile station 10a, etc. via the Internet 50. As the CD-ROM, etc. in which a plurality of above URLs is recorded, a CD-ROM, etc. that can be reproduced for car navigation may also be used. In this case, the PC, etc. 65 can be implemented as a car navigation computer.

As described above, by using a plurality of display areas, the browsing service processor, method and recording medium of the present invention can provide a browsing service processor, method and recording medium capable of browsing a plurality of programs simultaneously on a personal computer, etc. connected to a network.

Furthermore, when the user of a mobile station such as a cellular phone searches for programs, the user can search for the programs on the personal computer PC, etc. 65, book-mark URLs of desired programs and send the URLs of one or more book-marked programs to the mobile station 10a, etc. As a result, it is possible to provide a browsing service processor, method and recording medium capable of solving operational problems involving entries of URLs using input keys, and entering URLs simply and easily.

### INDUSTRIAL APPLICABILITY

As described above, the browsing service processor, method and recording medium of the present invention is useful as the browsing service processor, etc. capable of browsing a plurality of programs on a personal computer, etc. connected to a network. Especially, when the user of a mobile station such as a cellular phone directly connected to the Internet searches for programs, the present invention is suitable as a browsing service processor, etc. capable of entering URLs simply and easily.

## Claims

1. A browsing service processor for carrying out browsing services for information on a network, comprising:
a plurality of programs displaying means for displaying a plurality of programs including contents and menus indicating the contents simultaneously in predetermined areas;
program selecting means for selecting programs from among the plurality of programs simultaneously displayed by said plurality of programs displaying means;
identifier recording means for recording identifiers for identifying resources on a network on which the programs selected by using said program selecting means are placed; and
program displaying means for displaying the programs whose identifiers are recorded by said identifier recording means in the predetermined areas.

2. The browsing service processor according to claim 1,
when said program selecting means selects a single program, said program displaying means displays the contents and menus included in the single program in some of the predetermined areas according to a predetermined structure and displays profit-making information in other parts of the predetermined areas.

3. The browsing service processor according to claim 1, further comprising display position changing means for changing the position in a predetermined area in which the program is displayed by said plurality of programs displaying means to a position where the program can be selected more frequently using said program selecting means.

4. The browsing service processor according to any one of claims 1-3,
wherein the predetermined areas which are displayed by said plurality of programs displaying means are areas provided on a homepage connected via a network.

5. The browsing service processor according to any one of claims 1-3, further comprising transmitting means for transmitting information including the identifiers of the programs recorded by said identifier recording means to the outside via a network.

6. The browsing service processor according to claim 4, further comprising transmitting means for transmitting information including the identifiers of the programs recorded by said identifier recording means to the outside via a network.

7. A browsing service processing method for carrying out browsing services for information on a network, comprising:
a plurality of programs displaying step of displaying a plurality of programs including contents and menus indicating the contents simultaneously in predetermined areas;
a program selecting step of selecting programs from among the plurality of programs simultaneously displayed by said plurality of programs displaying step;
an identifier recording step of recording identifiers for identifying resources on a network on which the programs selected using said program selecting step are placed; and
a program displaying step of displaying the programs whose identifiers are recorded by said identifier recording step in the predetermined areas.

8. The browsing service processing method according to claim 7,
wherein the predetermined areas displayed by said plurality of programs displaying step are provided on a homepage connected via a network.

9. The browsing service processing method according to claim 7 or 8, further comprising a transmitting step of transmitting information including the identifiers of the programs recorded by said identifier recording step to the outside via a network.

10. A recording medium that records a computer-readable program that carries out a browsing service processing method for information on a network, the browsing service processing method comprises:
a plurality of programs displaying step of displaying a plurality of programs including contents and menus indicating the contents simultaneously in predetermined areas;
a program selecting step of selecting programs from among the plurality of programs simultaneously displayed by said plurality of programs displaying step;
an identifier recording step of recording identifiers for identifying resources on a network on which the programs selected using said program selecting step are placed; and
a program displaying step of displaying the programs whose identifiers are recorded by said identifier recording step in the predetermined areas.

11. The recording medium according to claim 10,
wherein the predetermined areas displayed by said plurality of programs displaying step are provided on a homepage connected via a network.

12. The recording medium according to claim 10 or 11, further comprising a transmitting step of transmitting information including the identifiers of the programs recorded by said identifier recording step to the outside via a network.

13. A browsing service processing system having a browsing service processor for carrying out browsing services for information on a network and a mobile station connected to said network,
said browsing service processor comprises:
a plurality of programs displaying means for displaying a plurality of programs including contents and menus indicating the contents simultaneously in predetermined areas;
program selecting means for selecting programs from among the plurality of programs simultaneously displayed by said plurality of programs displaying means;
identifier recording means for recording identifiers for identifying resources on a network on which the programs selected using said program selecting means are placed;
program displaying means for displaying the programs whose identifiers are recorded by said identifier recording means in the predetermined areas; and
transmitting means for transmitting information including the identifiers of the programs recorded by said identifier recording means to the outside via a network, and
said mobile station acquires information including the identifiers of the programs sent by said transmitting means.

14. The browsing service processing system according to claim 13,
wherein said browsing service processor further comprises program acquiring means for acquiring programs via a network and said mobile station acquires information including identifiers of the programs from said terminal apparatus.

15. A browsing service processor for carrying out browsing services for information on a network, comprising:
a program recording section that records programs including information input by the users of the browsing service and the contact addresses of the users;
searching means for searching programs having predetermined identifiers from the programs recorded in said program recording section; and
program displaying means for displaying the programs searched by said searching means in predetermined areas simultaneously according to the number of the programs.

16. The browsing service processor for carrying out browsing services for information on a network, comprising:
a program recording section that records programs including card designs;
a plurality of programs displaying means for displaying a plurality of programs recorded in said program recording section simultaneously in predetermined areas;
program selecting means for selecting programs from among the plurality of programs simultaneously displayed by said plurality of programs displaying means; and
transmitting means for transmitting information including the programs selected by said program selecting means or information including identifiers for identifying resources on a network on which the programs selected by said program selecting means are placed to the outside via a network.

17. The browsing service processor according to claim 16,
wherein the card recorded in said program recording section is a greeting card.

18. The browsing service processor according to claims 15-17,
wherein the program recorded in said program recording section displays price information regarding a predetermined product or service for which the users of the browsing service can receive a price service regarding the predetermined product or service at predetermined shops.

19. The browsing service processor according to claim 18,
wherein the price service is a discount service for discounting the purchasing price of a product or service providing price when the user purchases the product or receives the service.

20. The browsing service processor according to claim 18,
wherein the price service is predetermined points produced when the user purchases a product or receives a service and provides the user of the browsing service with points that allow a discount of the purchasing price or service providing price when the user purchases a product or receives a service later.

21. A browsing service processing method for carrying out browsing services for information on a network, comprising:
a searching step of searching programs having predetermined identifiers from a program recording section that records programs including information input by the users of the browsing service and the contact addresses of the users; and
a program displaying step of displaying the programs searched by said searching step simultaneously in predetermined areas according to the number of the programs.

22. A browsing service processing method for carrying out browsing services for information on a network, comprising:
a plurality of programs displaying means for displaying a plurality of programs recorded in a program recording section that records programs including card designs simultaneously in predetermined areas;
a program selecting step of selecting programs from among the plurality of programs simultaneously displayed by said plurality of programs displaying step; and
a transmitting step of transmitting information including the programs selected by said program selecting step or information including identifiers for identifying resources on a network on which the programs selected in said program selecting step are placed to the outside via a network.

23. The browsing service processing method according to claim 22,
wherein the card recorded in the program recording section is a greeting card.

24. The browsing service processing method according to claims 21-23,
wherein the programs recorded in the program recording section display discount information regarding a predetermined product or a service for which the users of the browsing service can receive a discount service regarding the predetermined product or service at predetermined shops.

25. A recording medium that records a computer-readable program that carries out a browsing service processing method for information on a network, the browsing service processing method comprises:
a searching step of searching programs having predetermined identifiers from the program recording section that records programs including information input by the users of the browsing service and the contact addresses of the users; and
a program displaying step of displaying the programs searched in said searching step simultaneously in predetermined areas according to the number of the programs.

26. A recording medium that records a computer-readable program that carries out a browsing service processing method for information on a network, the browsing service processing method comprises:
a plurality of programs displaying means for displaying a plurality of programs recorded in a program recording section that records programs including card designs simultaneously in predetermined areas;
a program selecting step of selecting programs from among the plurality of programs simultaneously displayed in said plurality of programs displaying step; and
a transmitting step of transmitting information including the programs selected in said program selecting step or information including identifiers for identifying resources on a network on which the programs selected in said program selecting step are placed to the outside via a network.

27. The recording medium according to claim 25 or 26, wherein the programs recorded in the program recording section display discount information regarding a predetermined product or service for which the users of the browsing service can receive a discount service regarding the predetermined product or service at predetermined shops.
